# EUROPÄISCHE PATENTSCHRIFT

(11) **EP 3 115 669 B1**
(45) Veröffentlichungstag und Bekanntmachung des Hinweises auf die Patenterteilung: **06.06.2018**
(21) Anmeldenummer: 16173853.9
(22) Anmeldetag: 10.06.2016
(51) Int. Cl.: F16L 11/08, A01G 25/00, F16L 11/04

(54) **SCHLAUCH, INSBESONDERE GARTENSCHLAUCH**
HOSE, IN PARTICULAR GARDEN HOSE
TUYAU, NOTAMMENT TUYAU D'ARROSAGE

(30) Priorität: 07.07.2015 DE 202015103579 U; 11.08.2015 DE 102015113218
(43) Veröffentlichungstag der Anmeldung: 11.01.2017
(73) Patentinhaber: REHAU AG + Co, 95111 Rehau (DE)
(72) Erfinder: Ebert, Carola, 95032 Hof (DE); Hübner, Christian, 95466 Neunkirchen am Main (DE); Ruckdäschel, Gerhard, 95163 Weißenstadt (DE); Sturm, Matthias, 95163 Weißenstadt (DE); Wazlawik, Klaus, 95030 Hof (DE)

(56) Entgegenhaltungen:
- EP-A1- 0 099 220
- EP-A1- 1 415 802
- WO-A1-02/16131
- WO-A1-2011/152991

## Beschreibung

Die Erfindung betrifft die Verwendung eines Schlauches zur Bewässerung von Gärten, mit
- einer auf einem PVC-Material basierenden Tragschicht, wobei dem PVC-Material zur Bereitstellung der nötigen Flexibilität ein Weichmacher zugesetzt ist, und
- einer die Tragschicht umgebenden Armierungsschicht.

Ein Schlauch mit den eingangs beschriebenen Merkmalen ist aus der Druckschrift EP 2 032 359 B1 bekannt. Derartige Schläuche mit einer auf Polyvinylchlorid (PVC) basierenden Tragschicht sind insbesondere bei Gartenschläuchen zur Bewässerung von Gärten oder dergleichen üblich. PVC zeichnet sich durch eine hohe Witterungsbeständigkeit, Knickstabilität und einen vergleichsweise günstigen Preis aus.

Um die für einen Gartenschlauch erforderliche Flexibilität zu gewährleisten, müssen dem PVC-Material jedoch regelmäßig Weichmacher zugesetzt werden. Im Stand der Technik kommen in diesem Zusammenhang insbesondere phthalathaltige Weichmacher zum Einsatz, welche ebenfalls über eine hohe chemische Stabilität verfügen und vergleichsweise kostengünstig sind.

In der bereits zitierten EP 2 032 359 B1 wird bemängelt, dass phthalathaltige Weichmacher aus der Tragschicht nach innen ausdiffundieren und damit im zu transportierenden Fluid, z.B. Trinkwasser, landen können. Dies sei ökologisch nicht völlig unbedenklich. Daher wird in diesem Stand der Technik vorgeschlagen, phthalatfreie Weichmacher einzusetzen, wie beispielsweise DINCH®, Sojaöl oder dergleichen. Bei dem in dieser Schrift vorgeschlagenen Gartenschlauch besteht jedoch unverändert das Problem, dass das zu transportierende Trinkwasser mit PVC in Kontakt kommt, welches ebenfalls ökologisch nicht völlig unbedenklich ist.

In der EP 2 032 352 B1 wird ein PVC-freier Gartenschlauch vorgeschlagen, welcher frei von flüssigen Weichmachern ist. Als Material für die Tragschicht wird hierbei die Verwendung von thermoplastischen Elastomeren vorgeschlagen, welche ohne den Einsatz von Weichmacherzusätzen die erforderliche Flexibilität bereitstellen. Thermoplastische Elastomere (TPE) sind jedoch vergleichsweise teuer. In der EP0099220 ist ein Schlauch offenbart, der eine PVC-Sperrschicht aufweist, aber nur im Brauereisektor,in biologischen und chemischen Prozessen sowie insbesondere im medizinischen Bereich eingesetzt wird. Vor diesem Hintergrund liegt der Erfindung die Aufgabe zugrunde, die Verwendung eines Schlauches zur Bewässerung von Gärten mit den eingangs beschriebenen Merkmalen anzugeben, der ökologisch unbedenklich und gleichzeitig kostengünstig herstellbar ist.

Erfindungsgemäß wird diese Aufgabe dadurch gelöst, dass an der Innenseite der Tragschicht des Gartenschlauches eine die Diffusion von PVC-Material aus der Tragschicht in das zur transportierende Fluid verhindernde polymere Sperrschicht angeordnet ist, die frei von PVC ist. Der Begriff "Diffusion von PVC-Material"Die Lehre basiert folglich auf der Überlegung, die von der Armierungsschicht umgebene, dem Schlauch seine Gestalt gebende Tragschicht nach innen hin durch eine Diffusionssperre in Form einer Sperrschicht zu ergänzen. Diese Sperrschicht dient als Barriere hinsichtlich einer Diffusion von PVC-Material in das zu transportierende Medium. Gleichzeitig kann mittels der Sperrschicht, sofern dies beispielsweise zur Einhaltung von besonders hohen ökologischen Standards erforderlich sein sollte, auch eine Diffusion von Weichmacher aus der Tragschicht in die zu transportierende Flüssigkeit vermieden werden. So kann beispielsweise die Sperrschicht eine generelle Sperrfunktion in der Form besitzen, dass sie jegliche Kontamination des zu transportierenden Fluides mit in der Tragschicht enthaltenen Substanzen verhindert.

Gemäß einer bevorzugten Ausführungsform der Erfindung bildet die Sperrschicht die innerste Schicht des Schlauches. Vorzugsweise ist dem Polymermaterial der Sperrschicht kein Weichmacher zugesetzt. In diesem Fall können lediglich aufgrund einer Eindiffusion von in der Tragschicht enthaltenem Weichmacher in die Sperrschicht dort sehr geringe Konzentrationen an Weichmachern auftreten. Im Rahmen der Erfindung liegt es ferner auch, dass die Sperrschicht ökologisch unbedenkliche Weichmacher enthält, wie z.B. Sojaöl. Gemäß einer bevorzugten Ausführungsform der Erfindung weist die Sperrschicht zusätzlich auch eine Diffusions-Sperrfunktion gegenüber Weichmachern auf. Auf diese Weise kann auch eine Kontamination des zu transportierenden Fluides mit dem in der Tragschicht enthaltenen Weichmacher verhindert werden.

Der Weichmacher der Tragschicht besteht vorzugsweise aus phthalatfreien Substanzen, wie z.B. Sojaöl, Adipinsäure, Adipaten, Essigsäure, DINCH, DEHT, DOTP, Zitraten oder dergleichen. Gemäß einer bevorzugten Ausführungsform der Erfindung basiert die Sperrschicht auf einem EVA- oder PUR-Material (EVA = Ethylenvinylacetat, PUR = Polyurethan). Als PUR-Material ist insbesondere ein thermoplastisches Polyurethan (TPU) geeignet. Alternativ kann die Sperrschicht auch auf einem PA-Material (PA = Polyamid) basieren. Es hat sich herausgestellt, dass diese Materialien besonders gute Diffusionssperren gegenüber PVC-Material darstellen. Ferner verfügen diese Materialien bei geringer Schichtdicke über eine ausreichende Eigenflexibilität, so dass in der Sperrschicht kein zusätzlicher Weichmacher benötigt wird. Überraschenderweise besitzen die Materialien EVA, PUR und PA auch eine sehr gute Diffusionsbarrierewirkung gegenüber Weichmachern.

Im Rahmen der Erfindung liegt es ferner, dass das Material der Sperrschicht teilweise oder vollständig aus einem Recyclat besteht. Bei diesem Recyclat kann es sich beispielsweise um produktionsinternes Rücklaufmaterial handeln, welches z.B. durch werksinterne Anfahrvorgänge, produzierte Ausschussware etc. entsteht.

Vorzugsweise ist die Armierungsschicht aus gewickelten und / oder geflochtenen Fäden und / oder Filamenten gebildet. Zweckmäßigerweise ist die Armierungsschicht von einer polymeren Schutzschicht umgeben, die vorzugsweise die Außenschicht des Schlauches bildet.

Die Sperrschicht weist zweckmäßigerweise eine Schichtdichte von 50 bis 500 µm, insbesondere 100 bis 400 µm, auf. Hierdurch ist insbesondere einerseits eine ausreichende Flexibilität der Sperrschicht auch ohne Zusatz von Weichmachern gewährleistet und andererseits gleichzeitig eine ausreichende Barrierefunktion gegenüber PVC und, sofern gewünscht bzw. erforderlich, dem in der Tragschicht enthaltenen Weichmacher sichergestellt. Der Innendurchmesser der Sperrschicht beträgt vorzugsweise 5 bis 40 mm, insbesondere 10 bis 20 mm.

Im Rahmen der Erfindung liegt es insbesondere, dass die Sperrschicht unmittelbar an die Tragschicht angrenzt. Besonders bevorzugt ist hierbei, dass die Sperrschicht mit der Tragschicht coextrudiert ist.

Im Folgenden wird die Erfindung anhand einer lediglich ein Ausführungsbeispiel darstellenden Zeichnung erläutert. Es zeigen schematisch:
Fig. 1 eine Seitenansicht eines Ausschnittes eines erfindungsgemäßen Schlauches und
Fig. 2 einen Querschnitt durch den in Fig. 1 dargestellten Schlauch.

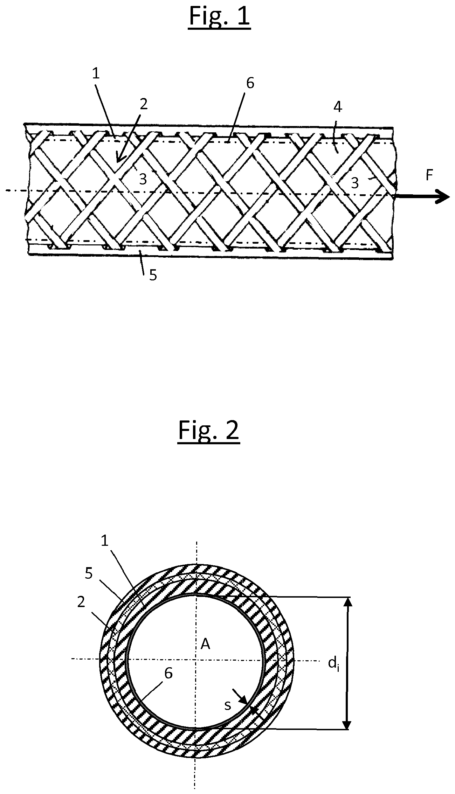

In Fig. 1 ist ein Gartenschlauch dargestellt, welcher zum Transport von Wasser F zwecks einer Bewässerung von Gärten eingesetzt wird. Der Schlauch weist eine Tragschicht 1 aus PVC-Material auf, wobei dem PVC-Material zur Bereitstellung der nötigen Flexibilität ein Weichmacher zugesetzt ist. Die Tragschicht 1 ist von einer Armierungsschicht 2 umgeben. Die Armierungsschicht 2 besteht im Ausführungsbeispiel aus geflochtenen Fäden 3. Im Ausführungsbeispiel ist die Armierungsschicht 2 offen gestaltet, d.h. zwischen den einzelnen sich überkreuzenden Fäden 3 verbleiben Freiräume 4, so dass der Gartenschlauch bei innerer Druckbelastung "atmen" kann. Die Armierungsschicht 2 ist von einer polymeren Schutzschicht 5 umgeben, welche die Außenschicht 5 des Schlauches bildet. Im Ausführungsbeispiel ist die Außenschicht 5 transparent ausgebildet.

Wie insbesondere der Fig. 2 zu entnehmen ist, ist an der Innenseite der Tragschicht 1 eine eine Diffusion von PVC-Material aus der Tragschicht 1 in das zu transportierende Wasser F verhindernde Sperrschicht 6 angeordnet, die frei von PVC ist. Es ist ferner anhand der Fig. 2 zu erkennen, dass die Sperrschicht 6 die innerste Schicht des Schlauches bildet. Im Ausführungsbeispiel ist der Sperrschicht 6 kein Weichmacher zugesetzt. Infolgedessen weist die Sperrschicht 6 lediglich ggf. nach einer gewissen Gebrauchsdauer des Gartenschlauches geringe Mengen an Weichmacher auf, welche aus der Tragschicht 1 in die Sperrschicht 6 eindiffundiert sind. Die Sperrschicht 6 weist jedoch auch gegenüber dem Weichmacher in der Tragschicht 1 eine sehr gute Diffusions-Sperrfunktion auf, so dass praktisch kein Weichmacher durch die Sperrschicht 6 hindurch diffundiert und in das zu transportierende Wasser F gelangt. Im Ausführungsbeispiel besteht die Sperrschicht 6 aus EVA oder alternativ einem PUR, z.B. einem TPU. Alternativ kann die Sperrschicht 6 auch aus PA bestehen. Die Sperrschicht 6 besteht im Ausführungsbeispiel teilweise aus Recyclat in Form von produktionsinternem Rücklaufmaterial. Insgesamt besteht somit der Gartenschlauch aus vier Schichten 1, 2, 5, 6.

Die Sperrschicht 6 weist im Ausführungsbeispiel eine Schichtdicke s von 200 bis 300 µm auf und besitzt einen den freien Strömungsquerschnitt A des Gartenschlauches definierenden Innendurchmesser dᵢ von 11,5 bis 13 mm. Der Fig. 2 ist zu entnehmen, dass die Sperrschicht 6 nach innen unmittelbar an die Tragschicht 1 angrenzt. Im Ausführungsbeispiel ist die Sperrschicht 6 mit der Tragschicht 1 coextrudiert.

## Patentansprüche

1. Verwendung eines Schlauches zum Transport eines Fluides (F) mit
- einer auf einem PVC-Material basierenden Tragschicht (1), wobei dem PVC-Material zur Bereitstellung der nötigen Flexibilität ein Weichmacher zugesetzt ist, und
- einer die Tragschicht (1) umgebenden Armierungsschicht (2),
- wobei an der Innenseite der Tragschicht (1) eine die Diffusion von PVC-Material aus der Tragschicht (1) in das zu transportierende Fluid (F) verhindernde polymere Sperrschicht (6) angeordnet ist, die frei von PVC ist,
zur Bewässerung von Gärten.

2. Verwendung nach Anspruch 1, **dadurch gekennzeichnet, dass** die Sperrschicht (6) die innerste Schicht des Schlauches bildet.

3. Verwendung nach Anspruch 1 oder 2, **dadurch gekennzeichnet, dass** dem Polymermaterial der Sperrschicht (6) kein Weichmacher zugesetzt ist.

4. Verwendung nach Anspruch 3, **dadurch gekennzeichnet, dass** die Sperrschicht (6) zusätzlich auch gegenüber Weichmachern eine Diffusions-Sperrfunktion aufweist.

5. Verwendung nach einem der Ansprüche 1 bis 4, **dadurch gekennzeichnet, dass** die Sperrschicht (6) auf einem EVA- oder PUR-Material basiert.

6. Verwendung nach einem der Ansprüche 1 bis 5, **dadurch gekennzeichnet, dass** das Material der Sperrschicht (6) teilweise oder vollständig aus einem Recyclat besteht.

7. Verwendung nach einem der Ansprüche 1 bis 6, **dadurch gekennzeichnet, dass** die Armierungsschicht (2) von einer polymeren Schutzschicht (5) umgeben ist, die vorzugsweise die Außenschicht des Schlauches bildet.

8. Verwendung nach einem der Ansprüche 1 bis 7, **dadurch gekennzeichnet, dass** die Sperrschicht (6) eine Schichtdicke (s) von 50 bis 500 µm, vorzugsweise 100 bis 400 µm, aufweist.

9. Verwendung nach einem der Ansprüche 1 bis 8, **dadurch gekennzeichnet, dass** die Sperrschicht (6) unmittelbar an die Tragschicht (1) angrenzt.

10. Verwendung nach Anspruch 9, **dadurch gekennzeichnet, dass** die Sperrschicht (6) mit der Tragschicht (1) coextrudiert ist.

## Claims

1. Use of a hose for transporting a fluid (F), having
- a support layer (1) based on a PVC material, wherein a plasticizer is added to the PVC material to provide the necessary flexibility, and
- a reinforcing layer (2) surrounding the support layer (1),
- wherein on the inside of the support layer (1) a polymeric barrier layer (6) preventing the diffusion of PVC material out of the support layer (1) into the fluid (F) to be transported is arranged, said barrier layer (6) being free from PVC,
for watering gardens.

2. The use according to claim 1, **characterized in that** the barrier layer (6) forms the innermost layer of the hose.

3. The use according to claim 1 or 2, **characterized in that** no plasticizer is added to the polymer material of the barrier layer (6).

4. The use according to claim 3, **characterized in that** the barrier layer (6) additionally has a diffusion barrier function against plasticizers.

5. The use according to one of claims 1 to 4, **characterized in that** the barrier layer (6) is based on an EVA or PUR material.

6. The use according to one of claims 1 to 5, **characterized in that** the material of the barrier layer (6) consists partly or completely of a recycled material.

7. The use according to one of claims 1 to 6, **characterized in that** the reinforcing layer (2) is surrounded by a polymeric protective layer (5), which preferably forms the outer layer of the hose.

8. The use according to one of claims 1 to 7, **characterized in that** the barrier layer (6) has a layer thickness (s) of 50 to 500 µm, preferably 100 to 400 µm.

9. The use according to one of claims 1 to 8, **characterized in that** the barrier layer (6) is directly adjacent to the support layer (1).

10. The use according to claim 9, **characterized in that** the barrier layer (6) is coextruded with the support layer (1).

## Revendications

1. Utilisation d'un tuyau pour le transport d'un fluide (F), comprenant
- une couche de support (1) basée sur une matière PVC, un plastifiant étant ajouté à la matière PVC pour fournir la flexibilité nécessaire, et
- une couche de renforcement (2) entourant la couche de support (1),
- une couche barrière (6) polymère empêchant la diffusion de matière PVC de la couche de support (1) dans le fluide (F) à transporter étant disposée sur le côté intérieur de la couche de support (1), laquelle couche barrière est exempte de PVC,
destinée à l'arrosage de jardins.

2. Utilisation selon la revendication 1, **caractérisée en ce que** la couche barrière (6) forme la couche la plus intérieure du tuyau.

3. Utilisation selon la revendication 1 ou 2, **caractérisée en ce qu'**aucun plastifiant n'est ajouté à la matière polymère de la couche barrière (6).

4. Utilisation selon la revendication 3, **caractérisée en ce que** la couche barrière (6) présente en plus une fonction de barrière à la diffusion également par rapport aux plastifiants.

5. Utilisation selon l'une quelconque des revendications 1 à 4, **caractérisée en ce que** la couche barrière (6) est basée sur une matière EVA ou PUR.

6. Utilisation selon l'une quelconque des revendications 1 à 5, **caractérisée en ce que** la matière de la couche barrière (6) est constituée en partie ou entièrement d'une matière de recyclage.

7. Utilisation selon l'une quelconque des revendications 1 à 6, **caractérisée en ce que** la couche de renforcement (2) est entourée par une couche de protection (5) polymère qui forme de préférence la couche extérieure du tuyau.

8. Utilisation selon l'une quelconque des revendications 1 à 7, **caractérisée en ce que** la couche barrière (6) présente une épaisseur de couche (s) de 50 à 500 µm, de préférence de 100 à 400 µm.

9. Utilisation selon l'une quelconque des revendications 1 à 8, **caractérisée en ce que** la couche barrière (6) est directement adjacente à la couche de support (1).

10. Utilisation selon la revendication 9, **caractérisée en ce que** la couche barrière (6) est coextrudée avec la couche de support (1).
